# DEMANDE DE BREVET EUROPEEN

(11) **EP 1 048 557 A1**
(43) Date de publication de la demande: **02.11.2000**
(21) Numéro de dépôt: 00420088.7
(22) Date de dépôt: 28.04.2000
(51) Int. Cl.: B62D 55/084

(54) **Plate-forme de propulsion modulaire et véhicule constitué à partir d'au moins une telle plate-forme**

(30) Priorité: 28.04.1999 FR 9905568
(71) Demandeur: Société de Matériels Techniques industriels, 71960 Pierreclos (FR)
(72) Inventeur: Landret, Daniel, 71960 Pierreclos (FR)
(74) Mandataire: Ropital-Bonvarlet, Claude

(57) **Abrégé**

- L'invention concerne une plate-forme de propulsion, du type comprenant un châssis **(2)** porteur équipé d'une unité **(3)** de production d'énergie et au moins deux ensembles de roulement et de propulsion **(11),** qui sont chacun entraînés par au moins un moteur réversible **(12)**.
- Selon l'invention, le châssis porteur est équipé :
   - d'au moins un ensemble amovible **(11)** de roulement et de propulsion qui est porté par un châssis amovible **(15)** adapté sur le châssis porteur **(2)** par des moyens de fixation **(16)** démontables et dont le moteur **(12)** est alimenté par des canalisations **(17)** reliées à l'unité **(3)** de production d'énergie par des moyens de raccordement amovibles, pour autoriser une utilisation de la plate-forme avec un seul ensemble de roulement et de propulsion,
   - de moyens **(20)** de raccordement, à l'unité **(3)** de production d'énergie, de moyens amovibles pour le contrôle du fonctionnement des moteurs,
   - et de moyens **(25)** de fixation pour au moins un équipement amovible de travail et/ou de transport.

## Description

La présente invention concerne le domaine technique des véhicules à moteur.

L'invention concerne plus particulièrement le domaine technique des engins agricoles ou de travaux publics sur roues ou chenilles de petite dimension destinés notamment à être utilisés dans des espaces réduits ou encombrés pour réaliser des travaux qui, sauf à mettre en oeuvre de tels engins, sont normalement effectués par l'homme au moyen d'outils à main ou portatifs.

Dans le domaine ci-dessus, il est par exemple connu de petites pelles mécaniques comprenant un châssis porteur équipé d'une unité de production d'énergie et au moins deux chenilles de propulsion, chacune entraînée par un moteur réversible, le plus généralement hydraulique. Le châssis porteur comprend également un bras mécanique articulé commandé par des vérins hydrauliques et portant à son extrémité une pelle ou un godet. Enfin, le châssis supporte un poste de pilotage comportant des organes de commande pour assurer le fonctionnement coordonné des moteurs des chenilles et des vérins du bras articulé.

Une telle pelle mécanique peut être utilisée dans le cadre de travaux publics ou encore de travaux agricoles en vue de réaliser des opérations de terrassement ou d'excavation.

De même, dans le domaine de la machinerie agricole, il est connu des machines pour vendanger les vignes comprenant une structure en U inversé destinée à permettre l'enjambement d'un rang de vigne. Cette structure comporte généralement, à chacune des extrémités des branches du U, une chenille de propulsion présentant un faible encombrement de manière à pouvoir évoluer dans l'espace réduit délimité par deux rangs de vigne contingus. Enfin, la structure comporte un dispositif de vendange mécanique ainsi qu'une unité de production d'énergie et un poste de pilotage afin d'alimenter et de commander le dispositif de vendange et les moteurs des chenilles de propulsion.

De tels engins existent également avec au niveau de chaque extrémité des branches du U un ensemble de propulsion et de roulement constitué par une série de roues alignées dont une au moins est motrice.

Les engins, tels que ci-dessus, donnent entière satisfaction pour la réalisation des travaux pour lesquels ils ont été prévus. Toutefois, il n'est pas possible de mettre en oeuvre ces engins ou machines pour des travaux très différents de ceux auxquels leur conception et leur forme les prédestinent.

Or, cet inconvénient, sans être complètement rédhibitoire, peut constituer un frein à l'équipement des exploitations agricoles ou des entreprises de petite taille et un obstacle à la mécanisation du travail réalisé par les exploitants ou le personnel de ces dernières. En effet, tel est par exemple le cas pour la machine à vendanger évoquée ci-dessus, dont l'utilisation n'intervient que sur une très courte période de l'exploitation annuelle de la vigne, alors qu'en revanche elle présente un investissement relativement lourd pour l'exploitant qui, compte tenu de la spécificité de la machine, n'est pas en mesure de l'amortir rapidement. De plus, du fait de la très courte période sur laquelle interviennent les vendanges, cette machine paraît difficile à exploiter convenablement dans le cadre de plusieurs exploitations, de manière à en répartir, autant que faire se peut, les coûts d'acquisition et d'entretien.

Il apparaît donc le besoin de disposer d'une machine pour le travail agricole, pour les travaux publics ou analogues, qui offre une très grande modularité, de manière à autoriser son utilisation selon différentes configurations d'équipements dans un nombre aussi important que possible de situations.

Afin d'atteindre cet objectif, l'invention propose une plate-forme de propulsion, du type comprenant un châssis porteur équipé d'une unité de production d'énergie et au moins deux ensembles de roulement et de propulsion, qui sont chacun entraînés par au moins un moteur réversible.

Selon l'invention, le châssis porteur est équipé :
- d'au moins un ensemble amovible de roulement et de propulsion, qui est porté par un châssis amovible adapté sur le châssis porteur par des moyens de fixation démontables, et dont le moteur est alimenté par des canalisations reliées à l'unité de production d'énergie par des moyens de raccordement amovibles, pour autoriser une utilisation de la plate-forme avec un seul ensemble de roulement et de propulsion,
- de moyens de raccordement à l'unité de production d'énergie de moyens amovibles pour le contrôle du fonctionnement des moteurs des ensembles de roulement et de propulsion au moins,
- et de moyens de fixation pour au moins un équipement amovible de travail et/ou de transport.

L'invention vise également un véhicule comprenant :
- au moins une plate-forme de propulsion, selon l'invention, sur le châssis porteur de laquelle est adapté un poste de pilotage amovible comprenant des moyens de commande raccordés aux moyens pour le contrôle du fonctionnement des moteurs des ensembles de roulement et de propulsion au moins
- et au moins un équipement amovible de travail et/ou de transport.

Selon une autre caractéristique de l'invention, afin de permettre une évolution de la plate forme de propulsion dans des environnements aussi réduits que possible, le châssis porteur présente, localement au moins, une section droite transversale sensiblement en T, définissant une tête et un corps de part et d'autre duquel sont adaptés les deux ensembles de roulement et de propulsion.

Selon encore une autre caractéristique, l'invention concerne un véhicule qui comprend une superstructure de liaison qui est adaptée de manière amovible sur deux plates-formes de propulsion dites première et deuxième, et qui porte un poste de commande et au moins un équipement de travail ou de transport.

Afin de réduire l'encombrement au sol d'un tel véhicule comportant deux plates-formes de propulsion, la possibilité offerte par l'invention de retirer les ensembles de roulement et de propulsion amovibles est mise à profit, de sorte que chacune des plates-formes de propulsion de ce véhicule est équipée d'un seul ensemble de roulement et de propulsion.

L'invention concerne également l'application d'un tel véhicule au travail d'un rang de vigne et, selon une autre caractéristique de l'invention, la superstructure présente localement au moins une section droite transversale, sensiblement en U inversé, définissant deux branches qui sont chacune adaptées sur une plate-forme de propulsion. La superstructure présente alors une conformation appropriée pour enjamber un rang de vigne ou analogue et permet un travail simultané sur les deux faces ou côtés de ce rang au moyen d'un équipement adapté sur ladite superstructure et commandé à partir d'un poste de pilotage également porté par la superstructure.

Diverses autres caractéristiques ressortent de la description faite ci-dessous en référence aux dessins annexés qui montrent à titre d'exemples non limitatifs des formes de réalisation et de mise en oeuvre de l'objet de l'invention.

La **fig. 1** est une élévation schématique d'une plate-forme de propulsion conforme à l'invention.

La **fig. 2** est une vue de face selon la ligne II-II de la plate-forme illustrée à la **fig.1**.

La **fig. 3** est une vue de détail d'un ensemble amovible de roulement et de propulsion à chenille constitutif d'une plate-forme selon l'invention.

Les **fig. 4** à **6** sont des vues illustrant une forme de réalisation d'un véhicule conforme à l'invention, mettant en oeuvre une plate-forme de propulsion telle qu'illustrée à la **fig. 1.**

Les **fig. 7** à **11** illustrent une autre forme de réalisation d'un véhicule selon l'invention, mettant en oeuvre deux plates-formes de propulsion telles qu'illustrées à la **fig. 1**.

Les **fig. 12** et **13** sont des vues analogues à la **fig. 3** et montrent des variantes de réalisation d'ensembles amovibles de roulement et de propulsion à roues.

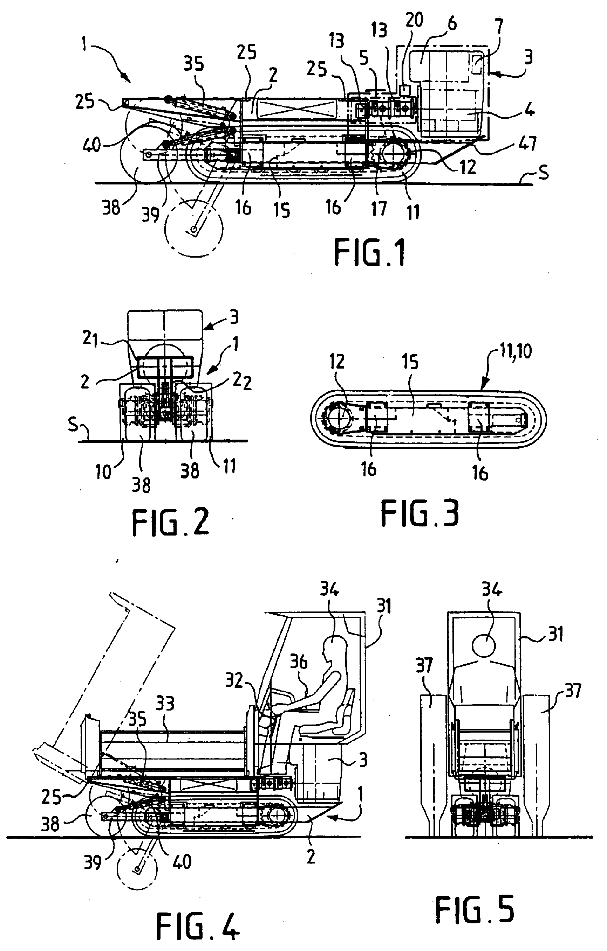

Comme cela ressort des **fig. 1** à **3**, la plate-forme de propulsion conforme à l'invention et désignée dans son ensemble par la référence **1**, comprend un châssis porteur **2**, équipé d'une unité de production d'énergie **3**. Selon l'exemple illustré, l'unité de production d'énergie **3** comprend un moteur thermique **4** qui entraîne un système convertisseur d'énergie **5**. L'unité de production d'énergie **3** comprend aussi un réservoir de carburant **6** ainsi qu'une unité **7** de gestion du fonctionnement du moteur thermique.

Le châssis porteur **2** est également équipé d'au moins deux, et selon l'exemple illustré d'exactement deux ensembles **10** et **11** de roulement et de propulsion, disposés sur le châssis 2 de manière à conférer à la plate-forme de propulsion **1** une certaine stabilité lorsqu'elle repose par les ensembles de roulement et de propulsion, sur un sol **S** sensiblement plan. Les ensembles **10** et **11** de roulement et de propulsion sont chacun entraînés de façon connue par au moins un moteur réversible **12**. De manière préférée, chaque moteur réversible **12** est un moteur hydraulique alimenté par le convertisseur d'énergie **5** qui est constitué par une ou plusieurs pompes hydrauliques à débit variable ou fixe **13**. Selon l'exemple illustré mais de manière non strictement nécessaire, le convertisseur **5** comprend au moins deux pompes **13,** chacune étant alors affectée à l'alimentation d'un moteur **12**. Bien entendu, les moteurs d'entraînement **12** des ensembles de roulement et de propulsion pourraient être électriques auquel cas le convertisseur **5** serait un générateur d'électricité.

Selon une caractéristique essentielle de l'invention, l'un au moins des ensembles de roulement et de propulsion et, de préférence mais non exclusivement, les deux ensembles de roulement et de propulsion sont amovibles. A cette fin, chaque ensemble **10, 11** est porté par un châssis amovible **15** qui est adapté sur le châssis porteur **2** par des moyens de fixation démontables **16**. Selon l'exemple illustré, ces moyens **16** de fixation démontables sont constitués par des platines de fixation assujetties au châssis **2** par des systèmes vis-écrous freinés. Bien entendu, l'adaptation du châssis amovible **15** sur le châssis porteur **2** pourrait être réalisée par tout autre moyen de fixation démontable connu de l'homme du métier. Afin d'autoriser un retrait et une remise en place de chaque ensemble amovible, chaque moteur 12 est alimenté par des canalisations **17** démontables qui sont reliées à l'unité de production d'énergie **3** par des moyens de raccordement amovibles. Selon l'exemple illustré, l'alimentation de chaque moteur hydraulique **12** est assuré au moyen de deux flexibles hydrauliques **17** raccordés à une pompe à débit variable **13**, constitutive du convertisseur d'énergie **5**, au moyen de raccords rapides.

Selon l'exemple illustré, les ensembles de roulement et de propulsion **10, 11,** sont chacun constitués par une chenille entraînée par au moins un moteur réversible **12**.

Toutefois, les ensembles **10, 11** pourraient être également chacun formés par une série de roues alignées dont une au moins est motrice en étant entraînée par un moteur réversible. Les roues des ensembles de roulement et de propulsion **10, 11** sont alors équipées de pneumatiques, de préférence mais non exclusivement, de type basse pression.

La suite de la description sera effectuée en relation avec les ensembles de roulement et de propulsion constitués par des chenilles. Cependant, les différentes caractéristiques de l'invention décrites s'appliquent, mutatis mutandis, au cas où les ensembles de roulement et de propulsion **10, 11,** seraient à roues, notamment.

Le châssis porteur **2** est également équipé de moyens de raccordement **20**, à l'unité de production d'énergie **3**, de moyens amovibles pour le contrôle au moins du fonctionnement des moteurs **12** des chenilles. Selon l'exemple illustré, les moyens de raccordement **20** sont constitués par un bloc de branchement pour le raccordement d'organes de commande permettant d'assurer un contrôle du débit des pompes hydrauliques **13** assurant l'alimentation des moteurs **12** des chenilles. La réalisation des moyens de raccordement **20** relève des compétences générales de l'homme de métier concepteur de machines agricoles ou de travaux publics, et ne nécessite pas de plus amples explications. Enfin, le châssis porteur **2** est équipé de moyens **25** de fixation pour un équipement amovible de travail ou de transport comme cela apparaîtra par la suite.

La plate-forme de propulsion selon l'invention, ainsi réalisée, constitue une base modulaire pour la réalisation d'un véhicule autonome.

Les **fig. 4** à **6** illustrent un exemple de mise en oeuvre d'une seule plate-forme de propulsion **1** conforme à l'invention, pour la réalisation d'un véhicule de transport **30** qui pourrait être qualifié de chenillette automotrice. Comme le montre plus particulièrement la **fig. 4,** cette chenillette **30** comprend une plate-forme de propulsion 1 sur le châssis porteur **2** de laquelle est, d'une part, adapté un poste de pilotage amovible **31** comprenant des moyens **32** pour le contrôle du fonctionnement des moteurs des chenilles au moins. Ces moyens **32** sont connectés de manière amovible ou démontable aux moyens **20** de raccordement à l'unité de production d'énergie **3**. Le châssis porteur **2** est, d'autre part, pourvu d'un équipement amovible **33** formé, selon l'exemple illustré, d'une benne adaptée sur les moyens de fixation **25**.

Le véhicule **30** ainsi constitué est alors en mesure de transporter de manière complètement autonome une charge disposée dans la benne **33** en étant contrôlé par un opérateur **34** ayant pris place dans le poste de pilotage **31.**

Selon une variante de réalisation préférée, la benne **33** est basculante et le châssis **2** est alors équipé de moyens moteurs **35** pour les mettre en mouvement. Ces moyens moteurs **35** sont constitués par un vérin hydraulique alimenté par le convertisseur **5** de l'unité de production d'énergie **3**. Le fonctionnement du vérin **35** est piloté par des moyens de commande **36** du poste de pilotage **31**. Ainsi, il est possible de commander à partir du poste de pilotage **31** les mouvements de la benne **33** entre une position repliée et une position basculée, illustrée en traits mixtes à la **fig. 4.**

Les moyens moteurs **35** constitués par le vérin hydraulique sont, de préférence, adaptés à demeure sur le châssis **2** et peuvent alors être mis en oeuvre avec toute autre sorte d'équipement de travail ou de transport susceptible d'être adapté sur la plate-forme **1**.

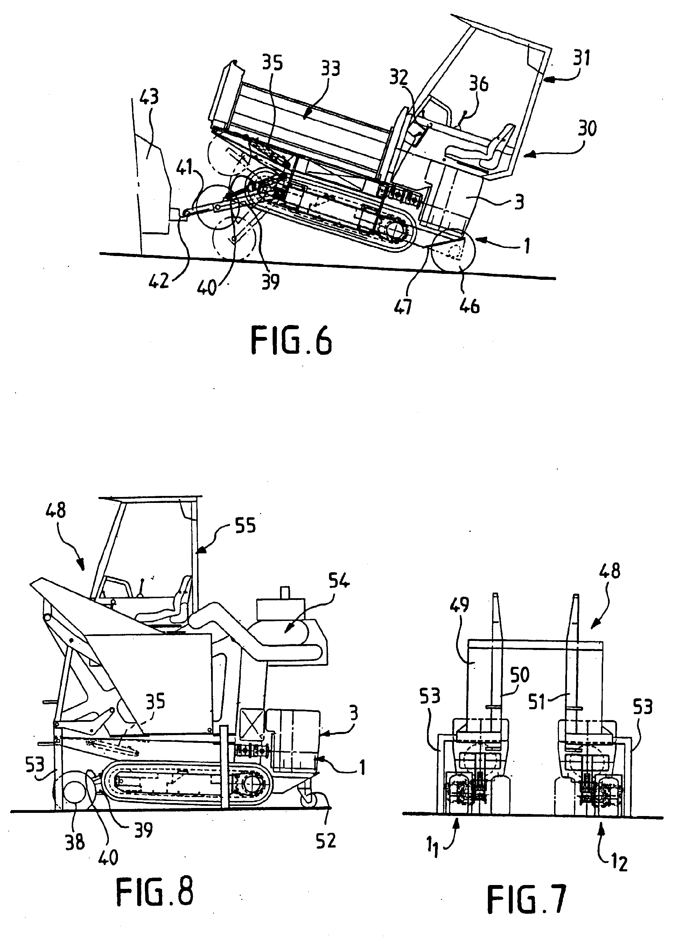

Selon une forme de réalisation préférée, la plate-forme est conçue pour permettre une évolution du véhicule **30** dans un espace réduit tel que, par exemple mais non exclusivement, celui délimité par deux rangs de vigne **37** contigus comme illustré schématiquement à la **fig. 5**. A cette fin, le châssis porteur **2** présente, localement au moins, une section droite transversale sensiblement en T. Cette section définit alors une tête **2**_{**1**} et un corps **2**_{**2**}**,** de part et d'autre duquel sont adaptées les deux chenilles **10** et **11**. Ainsi, les deux ensembles de roulement et de propulsion formés par les deux chenilles se trouvent rapprochés l'un de l'autre, aussi près que possible et la plate-forme de propulsion **1** présente un empattement réduit.

Conformément à une autre variante de réalisation de l'invention, la plate-forme de propulsion **1** présente à l'avant et/ou à l'arrière des chenilles, et selon l'exemple illustré à l'avant seulement, au moins une et de préférence deux roues stabilisatrices **38**, portées par un bras mobile en rotation **39** selon un axe sensiblement horizontal. Ce bras **39** est actionné par un vérin hydraulique **40** fixé, d'une part, sur la châssis porteur **2** et, d'autre part, sur ledit bras **39.** Le vérin hydraulique **40** est alimenté à partir de l'unité de production d'énergie **3** de manière à maintenir les roues **38** toujours en contact avec le sol **S** tout au long des déplacements du véhicule 30 constitué à partir de la plate-forme de propulsion **1** ainsi réalisée.

La **fig. 6** illustre une utilisation du bras mobile **39** pour le remorquage du véhicule **30**. A cette fin, le bras **39** est équipé d'un prolongateur **41** destiné à venir coopérer avec un crochet d'attelage **42** porté par un véhicule tracteur **43.** Par ailleurs, selon cet exemple, la plate-forme est équipée d'un train amovible de roues **46** qui est fixé sur une platine **47** présentée par le châssis porteur **2** à l'opposé des roues stabilisatrices **38.** Les mouvements du bras **39** commandé par le vérin **40** sont alors mis à profit pour, tout d'abord, placer le prolongateur **41** en relation avec le crochet **42**, puis soulever la plate-forme de propulsion **1** de manière à la faire reposer sur le sol par la seule entremise du train de roues **46**. Ainsi, le véhicule **30** dans son ensemble, ou la seule plate-forme de propulsion **1**, peuvent être remorqués par le véhicule tracteur **43**.

Selon l'exemple ci-dessus l'équipement de travail amovible **33** adapté sur la plate-forme de propulsion **1** est constitué par une benne. Bien entendu, cet équipement pourrait être constitué par tout autre dispositif approprié, tel que par exemple mais non exclusivement, un bras articulé de pelle mécanique actionné par des vérins hydrauliques qui seraient alimentés à partir de l'unité de production d'énergie **3** et pilotés par des moyens appropriés du poste de pilotage **31.** De même, l'équipement de travail amovible pourrait être constitué par divers outillages de travail de la vigne pour le traitement, le cisaillage, le labourage ou l'hersage. Le véhicule **30** conforme à l'invention pourrait également être équipé de moyens d'attelage pour être utilisé en tracteur ou en pousseur.

Selon l'exemple ci-dessus, le véhicule conforme à l'invention met en oeuvre une seule plate-forme de propulsion **1**. Toutefois l'invention prévoit la possibilité de mettre en oeuvre sur un même véhicule plusieurs plates-formes de propulsion **1**. Ainsi les **fig. 7** à **11** illustrent une forme de réalisation d'un véhicule **48** selon l'invention, mettant en oeuvre deux plates-formes de propulsion **1**.

Comme cela ressort plus particulièrement de la **fig. 7,** le véhicule ou engin **48** comprend une superstructure **49** de liaison qui est adaptée de manière amovible sur deux plates-formes dites première **1**_{**1**} et deuxième **1**_{**2**}**.** Selon l'exemple illustré, l'engin **48** est plus particulièrement destiné au travail mécanique d'un rang de vigne et la superstructure de liaison **49** présente, localement au moins, une section droite transversale sensiblement en U inversé définissant deux branches **50, 51,** chacune adaptée de manière amovible sur une plate-forme de propulsion respectivement **1**_{**1**} et **1**_{**2**}**.**

Dans une forme préférée de réalisation, chaque plate-forme **1**_{**1**} et **1**_{**2**} est équipée d'un système de stabilisation tel que décrit précédemment faisant intervenir deux roues **38** et le bras mobile **39** actionné par le vérin hydraulique **40**. De plus, chaque plate-forme **1**_{**1**} et **1**_{**2**} est équipée, à l'opposé des roues de stabilisation **38**, d'une roue folle **52** fixée de manière amovible sur la platine arrière **47** du châssis porteur **2** tel qu'illustré à la **fig 8.**

Ainsi, par la mise en oeuvre du système de stabilisation **38, 39, 40** et de la roue folle **52**, il est possible de surélever les chenilles par rapport au sol et de faire rouler facilement chaque plate-forme de propulsion **1**_{**1**} et **1**_{**2**} sur le sol. L'assemblage de la superstructure **49** avec les plates-formes de propulsion **1**_{**1**} et **1**_{**2**}**.**est alors effectué de la manière suivante.

Chaque plate-forme **1**_{**1**} et **1**_{**2**} de propulsion est placée sous une branche **50, 51**, de la superstructure **49** supportée par des pieds **53** amovibles. Les mouvements en hauteur de chaque plate-forme de propulsion, autorisés par la mise en oeuvre du vérin **38,** permettent alors de venir aisément fixer la superstructure **49** sur le châssis porteur **2**. Après fixation complète de la superstructure **49** sur les deux plates-formes **1**_{**1**} et **1**_{**2**}**,** les chenilles amovibles situées vers l'intérieur de la superstructure **49** sont retirées pour libérer un maximum d'espace dans cette région centrale de la machine ainsi constituée. Compte tenu de la stabilité de chaque plate-forme, il également possible de retirer l'une des chenilles avant la fixation de la plate-forme sur la superstructure **49.** Par ailleurs, la superstructure est équipée d'un dispositif de vendange **54** et d'un poste de pilotage **55** comprenant des moyens de commande.

Ensuite, les moteurs **12** des chenilles sont raccordés à une unité de production d'énergie **3**. De même, le dispositif de vendange est également raccordé à une unité de production d'énergie **3**. Enfin, il est procédé au branchement des moyens de commande du poste de pilotage **55** sur les moyens de raccordement **20** des plates-formes **1**_{**1**} et **1**_{**2**} pour le contrôle du fonctionnement des moteurs des chenilles au moins. Les moyens de commandes du poste de pilotage **55** peuvent également assurer le contrôle du fonctionnement du dispositif de vendange, des moteurs thermiques des unités de production d'énergie, du vérin **39** du système de stabilisation et du vérin supplémentaire **35.** Le raccordement entre les différents moteurs et les unités de production d'énergie et les moyens de commande peut être assuré par tous moyens appropriés connus de l'homme du métier et ne présent pas de difficultés particulières de réalisation.

De manière préférée, l'unité de production d'énergie de la première plate-forme de propulsion **1**_{**1**} est dédiée principalement à l'alimentation des moteurs de chenilles **12** des deux plates-formes tandis que l'unité de production d'énergie de la deuxième plate-forme **1**_{**2**} est affectée principalement à l'alimentation du dispositif mécanique de vendange. Ainsi, il est possible d'utiliser au mieux la puissance offerte par la mise en oeuvre des deux plates-formes **1**_{**1**}**, 1**_{**2**}**,** selon l'invention, disposant chacune d'une unité de production d'énergie **3**.

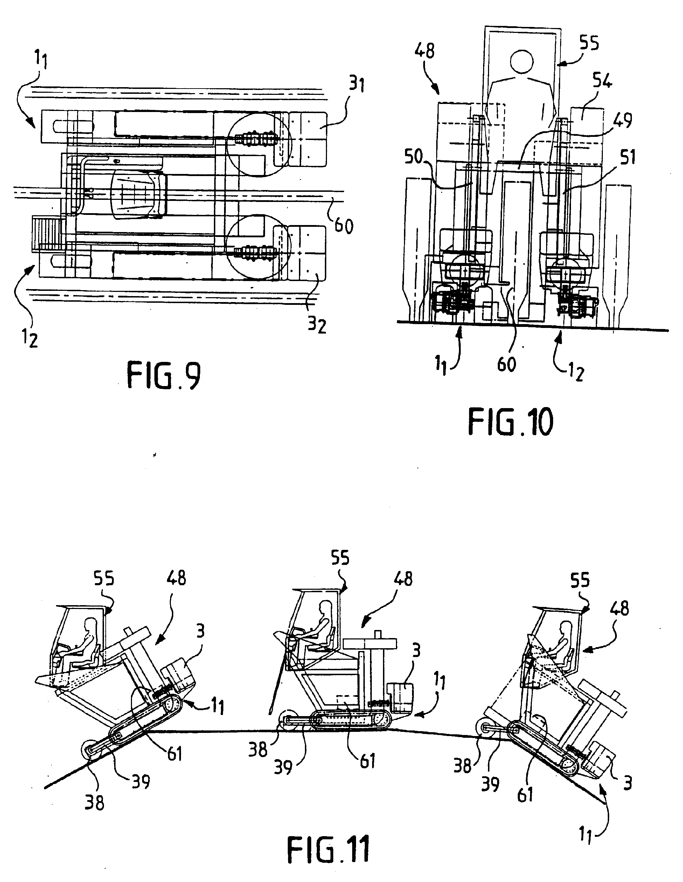

Les opérations de montage du véhicule **48** étant effectuées, les pieds **53** et la roue folle **52** de chaque plate-forme **1**_{**1**}**, 1**_{**2**} sont retirés. Le véhicule **48** peut alors être utilisé, conformément à la destination de son équipement de travail, pour vendanger un rang de vigne **60** comme le montre la **fig. 10.** La forme de la superstructure de liaison permet alors l'enjambement ou le passage à cheval du véhicule **48** sur le rang de vigne à travailler **60,** chaque plate-forme de propulsion **1**_{**1**} et **1**_{**2**}**.** étant située de part et d'autre dudit rang.

Selon une variante de réalisation préférée d'un tel véhicule **48** pour le travail mécanique d'une vigne, le poste de pilotage **55** est asservi en position horizontale au moyen d'un système de correction d'assiette de manière à pouvoir prendre en considération le dénivelé relativement important des zones sur lesquelles les vignes sont généralement exploitées. La **fig. 11** illustre la position relative du poste de pilotage par rapport au véhicule **48** selon l'inclinaison du sol. De plus, la **fig. 11** montre le fonctionnement du système de stabilisation **38, 39, 40,** qui maintient les roues **38** en contact permanent avec le sol **S** pendant les déplacements du véhicule **48**.

A cet égard, le fonctionnement du vérin **40** peut être piloté par une unité de commande automatique ou semi-automatique ou encore par l'utilisateur du véhicule. Le fonctionnement du vérin pourra être asservi pour empêcher le basculement du véhicule. Ainsi, par exemple, le vérin pourra être commandé de façon à interdire la remontée trop rapide des roues stabilisatrices lors du passage d'un fossé, le mouvement de remontée étant alors piloté automatiquement ou manuellement, de manière à contrôler l'assiette de l'ensemble du véhicule. De même, les mouvements des roues stabilisatrices peuvent être contrôlés, de manière à maîtriser la vitesse de basculement du véhicule lors du passage d'un terrain plat à un terrain en pente descendante.

Selon une autre variante de réalisation, la machine **48** comporte un système de stabilisation complémentaire comprenant une masse **61** déplacée en translation ou longitudinalement par rapport à l'orientation des plates-formes **1**_{**1**}**, 1**_{**2**} de manière à déplacer le centre de gravité de la machine pour en maintenir, autant que faire se peut, la projection dans le polygone d'appui de la machine quelque soit le degré d'inclinaison du sol.

De manière préférée, la machine comprend une telle masse **61** au niveau de chaque plate-forme. La masse **61** est par exemple montée sur des glissières et déplacée par un système moteur électrique ou hydraulique piloté par une unité de contrôle et de calcul comprenant, par exemple, des capteurs d'inclinaison.

Il doit être noté que le dispositif de correction automatique de l'assiette du poste de pilotage contribue également au déplacement du centre de gravité de l'ensemble du véhicule en vue de favoriser sa stabilité.

Après son utilisation pour les vendanges, l'engin ou véhicule **48** peut être démonté, et les plates-formes de propulsion **1**_{**1**}**, 1**_{**2**} peuvent être utilisées de manière indépendante après remontage de la chenille retirée, dans le cadre, par exemple, de la constitution d'un véhicule tel que décrit en relation avec les fig. 4 à 6. Ainsi, les plates-formes de propulsion conforment à l'invention peuvent, compte tenu de leur caractère modulaire, faire l'objet de diverses utilisations, de sorte que l'amortissement de l'investissement qu'elles représentent est rapide.

De même, selon l'exemple ci-dessus, l'équipement de travail **54** de la superstructure est un dispositif de vendange mais elle pourrait être pourvue de tout autre équipement de travail ou de transport.

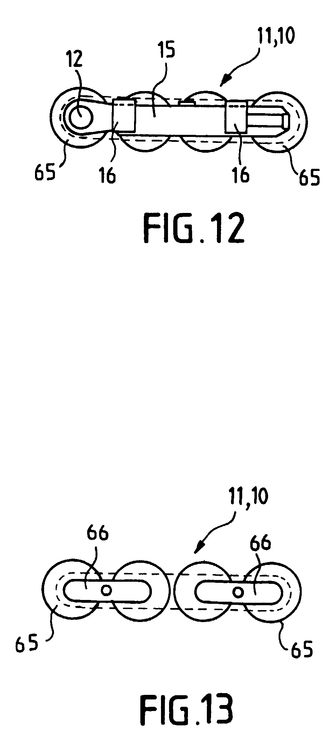

Comme dit précédemment, les ensembles **10, 11** de propulsion peuvent, au lieu d'être constitués par des chenilles, êtres formés par une série de roues **65**, comme illustré à la fig. 12, dont une au moins est motrice en étant couplée à un moteur réversible **12.** Bien entendu, les roues **69** pourraient être toutes motrices en étant chacune entraînée par un moteur réversible. Les moteurs d'un même ensemble de roulement et de propulsion sont alors raccordés en parallèle à l'unité de production d'énergie.

La **fig. 13** illustre un autre exemple de réalisation d'un ensemble **10, 11** de roulement et de propulsion à roue, dont les quatre roues sont assemblées par paire sur un palonnier **66** qui assure une prise en compte des obstacles et des dénivelés lors des déplacements de la plate-forme de propulsion.

L'invention n'est pas limitée aux exemples décrits et représentés car diverses modifications peuvent y être apportées sans sortir de son cadre.

## Revendications

1. Plate-forme de propulsion du type comprenant un chassis **(2)** porteur équipé d'une unité **(3)** de production d'énergie et au moins deux ensembles de roulement et de propulsion **(10, 11),** qui sont chacun entraînés par au moins un moteur réversible **(12),**
caractérisée en ce que le châssis porteur est équipé :
- d'au moins un ensemble amovible **(11)** de roulement et de propulsion qui est porté par un châssis amovible **(15)** adapté sur le châssis porteur **(2)** par des moyens de fixation **(16)** démontables et dont le moteur **(12)** est alimenté par des canalisations **(17)** reliées à l'unité **(3)** de production d'énergie par des moyens de raccordement amovibles, pour autoriser une utilisation de la plate-forme avec un seul ensemble de roulement et de propulsion**(10),**
- de moyens **(20)** de raccordement, à l'unité **(3)** de production d'énergie, de moyens amovibles **(32)** pour le contrôle du fonctionnement des moteurs desdits ensembles **10, 11,** au moins,
- et de moyens **(25)** de fixation pour au moins un équipement amovible de travail et/ou de transport **(33).**

2. Plate-forme selon la revendication 1, caractérisée en ce que le châssis **(2)** porteur présente localement au moins une section droite transversale sensiblement en T définissant une tête **(2**_{**1**}**)** et un corps **(2**_{**1**}**)** de part et d'autre duquel sont adaptées les deux ensembles **(10, 11)** de roulement et de propulsion.

3. Plate-forme selon la revendication 2, caractérisée en ce que les deux ensembles de roulement et de propulsion **(10, 11)**, tous deux amovibles, sont chacun portés par un châssis **(15)** amovible adapté sur un châssis porteur par des moyens de fixation démontables **(16).**

4. Plate-forme selon l'une des revendications 1 à 3, caractérisée en ce que le châssis porteur **(2)** est équipé, en avant et/ou en arrière des ensembles **(10, 11),** d'au moins une roue stabilisatrice **(38)** portée par un bras **(39)** mobile en rotation et actionné par un vérin **(40).**

5. Plate-forme selon l'une des revendications 1 à 4, caractérisée en ce que le châssis porteur **(2)** est équipé de moyens moteurs **(35)** destinés à fonctionner en relation avec un équipement de travail **(33)** adapté sur la plate-forme.

6. Plate-forme selon l'une des revendications 1 à 5, caractérisée en ce que :
- l'unité de production d'énergie comprend au moins un moteur thermique **(4)** entraînant au moins deux pompes hydrauliques à débit variable **(13),** un réservoir de carburant **(6)**, des moyens **(7)** de gestion du fonctionnement du moteur thermique,
- et les moteurs d'entraînement des ensembles de roulement et de propulsion sont des moteurs hydrauliques **(12).**

7. Véhicule caractérisé en ce qu'il comprend :
- au moins une plate-forme de propulsion **(1, 1**_{**1**}**, 1**_{**2**}**)** selon l'une des revendications 1 à 6, sur le châssis porteur de laquelle est adapté un poste de pilotage amovible **(31, 54)** comprenant des moyens de commande **(32)** raccordés aux moyens **(20)** pour le contrôle au moins du fonctionnement des moteurs **(12)** de propulsion,
- et au moins un équipement amovible **(33, 54)** de travail et/ou de transport.

8. Véhicule selon la revendication 7, caractérisé en ce qu'il comprend une superstructure de liaison **(49)** qui est adaptée de manière amovible sur deux plates-formes dites première **(1**_{**1**}**)** et deuxième **(1**_{**2**}**)** et qui porte le poste de commande **(55)** et au moins un équipement de travail ou de transport **(54).**

9. Véhicule selon la revendication 7, caractérisé en ce l'unité productrice d'énergie **(3**_{**1**}**)** de la première plate-forme **(1**_{**1**}**)** assure l'alimentation des moteurs **(12)** de propulsion des deux plates-formes **(1**_{**1**}**, 1**_{**2**}**)** et celle de la deuxième plate-forme assure l'alimentation de l'équipement de travail.

10. Véhicule selon la revendication 8 ou 9, caractérisé en ce que la superstructure **(49)** présente localement au moins une section droite transversale sensiblement en U inversé définissant deux branches **(50, 51),** chacune adaptée sur une plate-forme de propulsion **(1**_{**1**}**, 1**_{**2**}**).**

11. Véhicule selon les revendications 8 à 10, caractérisé en ce que chaque plate-forme de propulsion **(1**_{**1**}**, 1**_{**2**}**)** est équipée d'un seul ensemble de roulement et de propulsion.

12. Véhicule selon la revendication 10, caractérisé en ce que la superstructure **(49)** présente une conformation adaptée pour enjamber un rang de vigne **(60)** ou analogue.

13. Véhicule selon les revendications 7 à 12, caractérisé en ce que les plates-formes de propulsion **(1**_{**1**}**, 1**_{**2**}**)** sont à chenilles.

14. Véhicule selon les revendications 7 à 12, caractérisé en ce que les plates-formes de propulsion **(1**_{**1**}**, 1**_{**2**}**)** sont à roues.
